(19) Europäisches Patentamt
European Patent Office
Office européen des brevets

(11) EP 3 609 842 B1

(12) **EUROPEAN PATENT SPECIFICATION**

(45) Date of publication and mention of the grant of the patent:
**23.12.2020 Bulletin 2020/52**

(21) Application number: **18716888.5**

(22) Date of filing: **11.04.2018**

(51) Int Cl.:
***C01F 11/18*** *(2006.01)* ***B01J 8/02*** *(2006.01)*
***C02F 5/02*** *(2006.01)* ***B01J 8/04*** *(2006.01)*
***B01J 19/30*** *(2006.01)* ***C09C 1/02*** *(2006.01)*

(86) International application number:
**PCT/DK2018/050074**

(87) International publication number:
**WO 2018/188711 (18.10.2018 Gazette 2018/42)**

(54) **METHOD FOR PRODUCTION OF PRECIPITATED CALCIUM CARBONATE (PCC)**

VERFAHREN ZUR HERSTELLUNG VON GEFÄLLTEM CALCIUMCARBONAT (PCC)

PROCÉDÉ DE PRODUCTION DE CARBONATE DE CALCIUM PRÉCIPITÉ (PCC)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2017 PCT/DK2017/050118**

(43) Date of publication of application:
**19.02.2020 Bulletin 2020/08**

(73) Proprietor: **AA-Water ApS**
**2400 København NV (DK)**

(72) Inventor: **AKTOR, Henrik**
**2400 København NV (DK)**

(74) Representative: **AWA Denmark A/S**
**Strandgade 56**
**1401 Copenhagen K (DK)**

(56) References cited:
**EP-A2- 1 120 380** **WO-A2-2011/110744**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 609 842 B1

## Description

Field of invention

The present invention in a first aspect relates to a method for production of calcium carbonate (PCC). Further, in a second aspect the invention relates to a plant for production of calcium carbonate according to the method of the first aspect of the invention.

Background of the invention

Calcium carbonate, $CaCO_3$, is a compound of versatile use and is obtained from both geological and biological sources. Rocks such as limestone, chalk, marble, and travertine are dominated by calcium carbonate and as a pure mineral it is known in the forms of calcite, aragonite and vaterite.

Data on the worldwide annual mining of calcium carbonate ore are not readily available but a mining of around 1 billion tons annually in USA alone corresponds reasonably to estimates of 10 to 15 billion tons globally.

Calcium carbonate is considered non-toxic and is used in a wide range of applications as filler in paints and plastics and direct food additive, as a pharmaceutical or as an indirect additive in paper products that come in contact with food. It is used in agriculture, carpet backing, animal feeds, asphalt filler, floor coverings and tiles.

In many applications precipitated calcium carbonate (PCC) is preferred due to a lower content of the impurities inherent in most natural ores as well as a better control of particles size and shape.

Precipitated calcium carbonate (PCC) is generally made by direct carbonation of hydrated lime, known as the milk of lime process based on mining of high purity ore, crushing, refining, calcination (approximately 1000 °C) and slaking.

During calcination, the calcium carbonate of the crushed rock is taken apart to yield lime and carbon dioxide gas: $CaCO_3 + \text{heat} \rightarrow CaO + CO_2\uparrow$. Water is then added to the lime to form slake (calcium hydroxide): $CaO + H_2O \rightarrow Ca(OH)_2$, which is finally combined with carbon dioxide to reform calcium carbonate as PCC: $Ca(OH)_2 + CO_2 \rightarrow CaCO_3\downarrow + H_2O$.

Ore mining and the additional energy intensive industrial processing of the PCCs take an environmental toll in terms of irreversible reduction of natural resources, emission of residuals, energy consumption and carbon footprint. Therefore, the use of PCCs which are residuals from other industrial processes is of great interest.

In the water industry, calcium carbonate is removed during the process of water softening. Domestic and industrial use of water is often adversely affected by water hardness, the content in the water of calcium and magnesium ions. The effects are mainly increased consumption of soap, detergents and phosphate, increased corrosion and calcium carbonate scaling of household equipment, boilers and other heating devices.

To prevent precipitation of calcium carbonate at the customers' taps, calcium ions are partially removed from the water by drinking water companies and industrial utilities. This is called softening.

The financial benefits of softening are often greater than the costs.

Amsterdam Water Supply has calculated that the benefits of softened water for one single household comes to a saving of approximately 45 EUR/yr., mainly as a result of decreased use of detergent, less maintenance on washing machines and boilers, and lower energy costs, whereas the softening costs for a household are approximately 10 EUR/yr. (https://ocw.tudelft.nl/wp-content/uploads/Softening-1.pdf).

In addition to decreasing the hardness of water, another important reason for softening is the reduced release of heavy metals.

A number of current technologies for removal of hardness are used on an industrial scale. Thus, mention will be briefly made of ion exchange, membrane filtration, slow softening by precipitation of $CaCO_3$, pellet softening by catalytic precipitation of $CaCO_3$, and electrolysis.

Softening by ion exchange involves the use of an organic resin or an inorganic mineral, which is regenerated with NaCl (only hardness removal), $CO_2$ or acid (some removal of anions also). These methods generally entail a high consumption of chemicals and production of wastewater, depending on resin type, and may also result in addition of ions, e.g. sodium, to the water with adverse health effects.

Membrane filtration - e.g. reverse osmosis or nanofiltration - applies high differential cross membrane pressure to produce a filtrate low on hardness and other ions. The major drawbacks are high energy consumption and the generation of wastewater; the so-called reject.

Slow softening involves the addition of lye (e.g. NaOH or $Ca(OH)_2$) and coagulant as well as flocculants to aid the sedimentation process. It uses significant amounts of chemicals, produces some waste water and gives rise to a sludge containing $CaCO_3$, which must be dewatered for handling. The PCCs from slow softening thus generally contain a large amount of residuals from coagulant and polymers.

The slow softening sedimentation process unit takes up a considerable amount of building space and is mainly applicable at high throughput (economy of scale is important). A filtration process after sedimentation to remove particles from the water is indispensable.

Pellet softening by catalytic precipitation of $CaCO_3$ on fluidized particles is a compact unit operation, which utilizes addition of lye and sand grains combined with removal of $CaCO_3$ pellets at regular intervals. The major drawbacks are high consumption of chemicals and complexity of engineering, which favours application at high throughput (economy of scale is important). The use of milk of lime lye which is produced from limestone ore itself is rather ineffective from a resource perspective, while the production of sodium hydroxide lye places a major carbon footprint on the softening process and the use also releases sodium into the finished water. Further, there must be a pH adjustment as well as a filtration process after pellet softening to remove particles from the water.

The hard pellets contain impurities from the seed grains and therefore have a limited usefulness in agricultural applications and industry such as production of glass and carpets, where PCC filler is in demand. Reuse of the pellets has been suggested due to the need for continuous addition of seeding material and the intrinsic risk of microbial contamination from freshly introduced sand. However, in that case the pellets must be grinded to smaller sizes and breaking the hard $CaCO_3$ scaling of the pellets requires very energy intensive methods, e.g. hammer mills, where scale of economy is needed.

Electrolysis relies on a system of several plates arranged as cathode - anode pairs combined with laminar flow between the plates to precipitate $CaCO_3$ on the cathodes. The major drawback is a high energy consumption and unavoidable redox reactions at the electrodes, which produces unwanted by-products, e.g. chlorine, trihalomethanes (e.g. chloroform) and bromate, which are introduced into the treated water.

A general feature of the methods of the prior art is that precipitation of $CaCO_3$ on regenerable filter bed elements has not been aimed for, where the elements were not to be regenerated by chemical means. On the contrary it has often been of prominent concern to assure that precipitation of calcium carbonate does not take place on internal structures in the reaction zone of the applied production device, cf. in this regard e.g. the international patent application WO 2011/110744 A2.

## Summary of the invention

In view of the above, it is an object of the present invention to provide a technical solution for simultaneously reducing the energy consumption, making it possible to dispense with the use of chemical agents and avoiding the generation of wastewater during the production of precipitated calcium carbonate (PCC) from aqueous solutions.

To meet this object, a method for production of precipitated calcium carbonate is provided in a first aspect, said method comprising the steps of providing an aqueous solution of calcium, carbon dioxide, bicarbonate, and carbonate; providing at least one reactor (1) containing a bed (2) of shaped elements, said elements being prepared from a material showing a lower modulus of elasticity than precipitated calcium carbonate, and a number of vertical shafts (3) extending from the bottom region of said reactor to at least the top of said bed; introducing said solution through an inlet (5) to said at least one reactor and withdrawing the solution from the reactor from an outlet (6) horizontally separated from the inlet, thereby creating a horizontal flow (14) and a corresponding horizontal hydraulic pressure gradient through the bed of shaped elements; injecting a compressed gas (8) into the aqueous solution to effect a displacement of the aqueous solution inside the shafts and a corresponding oppositely directed vertical hydraulic pressure gradient through the bed of shaped elements outside the vertical shafts, and a gas-water interface to drive off carbon dioxide dissolved in the aqueous solution; removing gas including driven off carbon dioxide from a headspace above the bed of shaped elements (10); removing by non-chemical means a surface coating precipitated on at least a part of the shaped elements, when a target thickness of said coating has been obtained, the coating consisting substantially of calcium carbonate.

It has surprisingly been found that by the combined steps of the method, a precipitate on the shaped elements may be obtained, which is stable yet easy to remove by non-chemical means.

Hereby, a robust, simple, environmentally friendly method is provided that produces a $CaCO_3$ precipitate of a low water content, high purity and with a broad range of potential agricultural and industrial applications. Moreover, the method significantly lowers the hardness and scaling potential of the processed aqueous solution.

In a first main embodiment, said shafts (3) extend from the bottom of the reactor to the top of said bed (2) and are perforated in their bottom region (4) with a mesh size preventing said shaped elements from entering the shafts, and the compressed gas (8) is injected into the aqueous solution at the bottom of the vertical shafts to effect an upward displacement (11) of the aqueous solution inside the shafts and a corresponding downward directed vertical hydraulic pressure gradient through the bed of shaped elements outside the vertical shafts (13), and a gas-water interface inside the shafts (12) to drive off carbon dioxide dissolved in the aqueous solution.

In the first main embodiment, the perforated bottom region of the shaft may be in the form of a broadened base. Thus, in the case of a cylindrical shaft the base may be conical. Preferably, the wall of the shaft above the bottom region, i.e. the major part of the shaft, is not perforated.

Preferably, in the first main embodiment, the shaped elements are further prevented from entering the vertical shafts by screens provided at the top openings of the shafts.

Further, to prevent short-circuiting of the horizontal flow through the bed from the inlet to the outlet of the reactor in the first embodiment, the water table in the reactor in the first main embodiment may be within the porous bed, or aqueous solution flowing above the bed may be banked up by one or more vertical baffles. Optionally, the baffles span the top of the bed from one wall of the reactor to the opposite wall.

In a second main embodiment, the compressed gas (8) is injected into the aqueous solution (69) above a screen (64), said screen retaining the bed (2) of shaped elements at a level below a water surface of the aqueous solution, to effect an upward displacement (61) of the aqueous solution above the screen (64), a downward displacement (62) of the aqueous solution inside the shafts, and a corresponding upward directed vertical hydraulic pressure gradient through the bed of shaped elements outside the vertical shafts (63), and a gas-water interface in the aqueous solution above the screen (64) to drive off carbon dioxide dissolved in the aqueous solution. The depth of the air injection (69) below the surface of the aqueous solution may preferably be from 0-80 %, preferentially 10-50 %, of the total depth of the solution within the reactor (1). Preferably, the total depth of the aqueous solution in the reactor is in the range of 2-6 m. Advantageously, the level of the air injection is 0.5-3 m below the surface of the aqueous solution.

Preferably, in this second main embodiment, the shafts have no screens at the bottom or at the top.

Further, in the second main embodiment, the aqueous solution flowing above the bed may be banked up by one or more vertical baffles to prevent short-circuiting of the horizontal flow through the bed from the inlet to the outlet of the reactor. Optionally, the baffles span the top of the bed from one wall of the reactor to the opposite wall.

Within both above-mentioned main embodiments, the reactor may be of any suitable form, such as cylindrical or box-shaped, and may be prepared from any material of appropriate strength and stiffness for the desired dimensions, such as steel, plastics or concrete. Several reactors may be serially connected from the outlet of one reactor to the inlet of another. Preferably, 2 to 5 reactors are employed in series.

The shaped elements preferably are shaped as cylinders or wheels having dimensions of 3-30 mm.

The vertical shafts may be of different cross section, such as circular or rectangular elongated, i.a. dependent on the shape of the reactor. "Vertical" in this context should be understood in a functional sense and may also encompass oblique orientations, as long as the compressed gas injected at the bottom of the shaft will bring about an upward airlift displacement of solution inside the shaft.

The number of shafts per reactor is 1, 2, 3, or more. A number of internally circulating cells, preferentially 3 to 5 per reactor, is to be generated in the bed of shaped elements.

According to a preferred embodiment, the ratio between the respective magnitudes of the vertical and the horizontal hydraulic pressure gradients in the bed of shaped elements amounts to 5 to 100, preferably 10 to 50.

Advantageously, the surface coating on the shaped elements is removed continuously or intermittently to balance the addition of mass from the precipitation.

According to one embodiment, coating is removed from the surface of shaped elements in the reactor by intermittent injection of compressed air in the bed of shaped elements at one or several points, said injection provoking an air scour that detaches coating as separate particles, which due to a high specific density settle at the reactor bottom, from where they are withdrawn through one or more outlets.

In an alternative embodiment, coating is removed from the surface of a fraction sample of shaped elements, preferably chosen from the bottom of the bed of shaped elements, in a separate vessel or reactor, such as a hydrocyclone, by mechanical forces, preferably hydraulic shear, and/or ultrasound, whereafter said fraction sample of shaped elements are reintroduced to the top of the bed of shaped elements in the reactor.

According to a specific embodiment, coated particles are withdrawn from several points across the bed along the direct route in the reactor from the solution inlet to the outlet to obtain an assortment of different grades of PCC, as iron and manganese are predominantly removed in the early phase of the precipitation process.

Typically, the compressed gas injected into the aqueous solution is atmospheric air, but other gases or mixtures of gases may also be employed.

Advantageously, no extraneous chemicals are added to the aqueous solution of dissolved calcium, carbon dioxide, bicarbonate and carbonate.

In one embodiment, the aqueous solution is subjected in the reactor to an essentially non-biological treatment only. Here, "an essentially non-biological treatment" should not be taken to exclude the concomitant removal of ammonium and manganese from the aqueous solution, relying on biological processes, but the establishment and maintenance of an extensive biofilm on the shaped elements will not be pursued as a steering objective and must not compromise the effective catalytic precipitation of calcium carbonate on said elements.

According to a preferred embodiment, the aqueous solution is ground water or surface water with an inherent content of dissolved calcium, carbon dioxide, bicarbonate and carbonate. Thus, no lime or slake is added during the PCC production process. Preferably, the PCC production enters into a procedure of water softening.

In a further embodiment, at least a fraction of the bed of shaped elements has been seeded with calcium carbonate before introduction of the solution to the reactor in order to catalyze the precipitation of surface coating on the shaped elements. The virgin bed may be seeded in situ with a coating of $CaCO_3$ by addition of a solution of stoichiometric amounts of highly soluble calcium and bicarbonate salts such as calcium chloride and soda to the shaped elements.

Preferably, the specific density of the shaped elements is between 0.80 and 1.5 kg/L, most preferred 0.88-0.98 kg/L.

The modulus of elasticity (Young's Modulus) of the shaped elements should preferably be between $0.05 \cdot 10^9$ N/m2 and $5.10^9$ N/m2 (GPa), preferably between 0.4 and 4 GPa.

The shaped elements preferably are composed of 80-100 % polymeric material, preferably polypropylene or polyethylene (low, medium or high density) of a thickness in the range of 0.2 to 1.0 mm.

To meet the aforementioned object, a plant for production of precipitated calcium carbonate (PCC) according to the method of the first aspect of the invention is provided according to a second aspect of the invention, said plant comprising at least one reactor comprising: a bed (2) of shaped elements, said elements being prepared from a material showing a lower modulus of elasticity than precipitated calcium carbonate; 1, 2, 3 or more vertical shafts (3) extending from the bottom region of said reactor to at least the top of said bed; an inlet (5) and an outlet (6) for an aqueous solution, horizontally spaced apart; at least one inlet for injection of a compressed gas (8) into the aqueous solution; an outlet (10) to remove gas from a headspace above the bed of shaped elements; at least one inlet (21) for injection of compressed air (20) for removal of a coating from the surface of the shaped elements, said coating substantially consisting of precipitated calcium carbonate; and at least one outlet (23) for withdrawal of settled particles of calcium carbonate, being provided with a screen of a mesh size large enough to let the settled particles pass but smaller than the smallest diameter of the shaped elements, and being operated by at least one control valve (24).

The plant presents the same or similar advantages as the method of the first aspect of the invention. Moreover, it is compact, simple, and hygienic in operation and maintenance.

In a first main embodiment, said shafts (3) extend from the bottom of the reactor to the top of said bed (2) and are perforated in their bottom region (4) with a mesh size smaller than the smallest diameter of the shaped elements, and are likewise provided with a screen at their top opening end having a mesh size smaller than the smallest diameter of the shaped elements; and wherein the at least one inlet for injection of a compressed gas (8) is for injection of the compressed gas into the aqueous solution at the bottom of the vertical shafts (9).

In a second main embodiment, the plant further comprises a screen (64) above the bed (2) of shaped elements, said screen having a mesh size smaller than the smallest diameter of the shaped elements; and wherein the at least one inlet for injection of a compressed gas into the aqueous solution is located above said screen (64). The depth of the air injection (69) below the surface of the aqueous solution may be from 0-80 %, preferably 10-50 %, of the total depth of the solution within the reactor (1). Preferably, the total depth of the aqueous solution in the reactor is in the range of 2-6 m. Advantageously, the level of the air injection is 0.5-3 m below the surface of the aqueous solution.

In the second main embodiment, the shafts (3) preferably have no screens at the bottom and at the top.

Within both of the above-mentioned main embodiments of the plant, the plant may further be provided with one or more vertical baffles (15) in order to bank up any aqueous solution flowing above the bed of shaped elements, thus preventing short-circuiting of the horizontal flow through said bed from the inlet to the outlet. Optionally, the baffles span the top of the bed of shaped elements from a wall of the reactor to the opposite wall.

In one embodiment, the vertical shafts are substantially cylindrical.

Likewise, the reactor in one embodiment is substantially cylindrical.

Alternatively, the reactor is shaped in the form of a box, i.e. is cuboid. Preferably in this case the vertical shafts are formed as rectangular or laminar bodies and span the reactor from one wall to the opposite wall.

In a preferred embodiment, the plant comprises several serially connected reactors.

## Brief description of the drawings

The invention will be described in more detail below by means of non-limiting examples of presently preferred embodiments and with reference to the schematic drawings, in which:

Fig. 1 shows a plane view of a reactor in an embodiment with circular shafts.

Fig. 2 shows a plane view of a reactor in an embodiment with rectangular shafts.

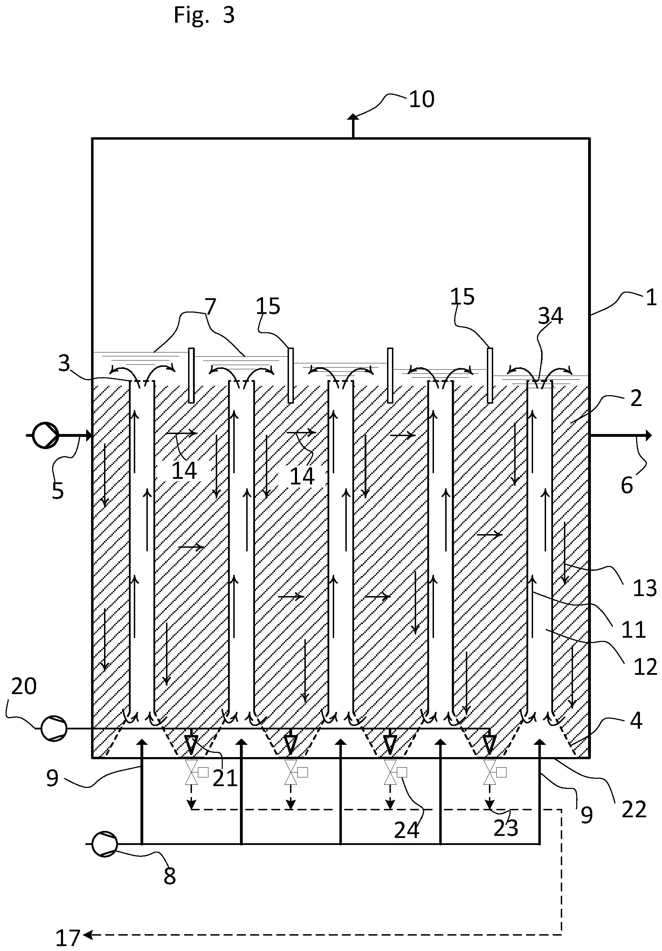

Fig. 3 shows a section through a reactor in an embodiment with air scour inside the reactor and upward displacement of aqueous solution inside vertical shafts.

Fig. 4 shows a section through a reactor in an embodiment with $CaCO_3$ removal in a separate vessel and upward displacement of aqueous solution inside vertical shafts.

Fig. 5 shows a plane view of an embodiment with a cylindrical reactor.

Fig. 6 shows a section through a cylindrical reactor in an embodiment with supporting mesh grid, upward displacement of aqueous solution inside vertical shafts and $CaCO_3$ removal in a conical bottom outlet.

Fig. 7 shows a bench scale test rig (0.1 $m^3$ per hour) used for the test of Example 1.

Fig. 8 shows XRD identification of calcite as the $CaCO_3$ mineral.

Fig. 9 shows a plane view of an embodiment with a cylindrical reactor, a radial single complete partition wall and radial double baffles, the latter controlling the water level and keeping back foam and bubbles.

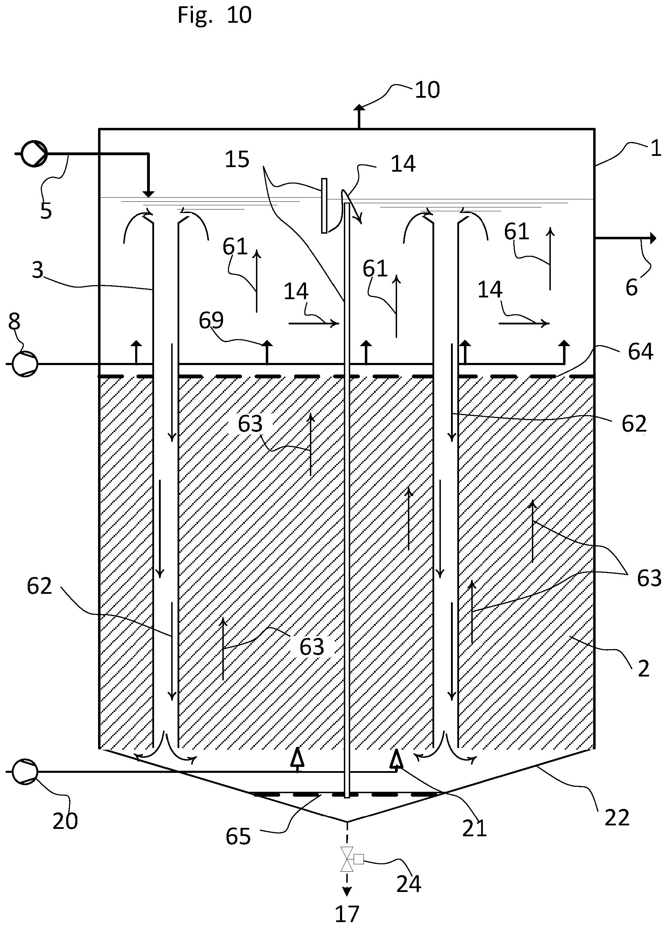

Fig. 10 shows a section through a reactor in an embodiment including a screen above a fluidized bed of shaped elements, upward displacement of aqueous solution through said bed, and downward displacement of aqueous solution inside vertical shafts.

## Detailed description of the invention

$CaCO_3$ in one embodiment is precipitated on a solid medium submerged in an aqueous solution of calcium, carbon dioxide, bicarbonate, and carbonate represented by groundwater. The submerged solid medium is composed of shaped elements randomly packed within a box-shaped concrete reactor (1) as a water penetrable porous bed (2). The reactor contains a number of vertical shafts (3), which penetrates the porous bed from its bottom to the top. The shafts have screens at the bottom (4) and at the top (34) with a mesh size, which prevents the shaped elements of the porous media from entering the shafts.

The aqueous solution is introduced (5) and withdrawn (6) from the reactor at horizontally separate points creating a horizontal flow (14) and a corresponding horizontal hydraulic pressure gradient (7) through the porous bed of the solid medium.

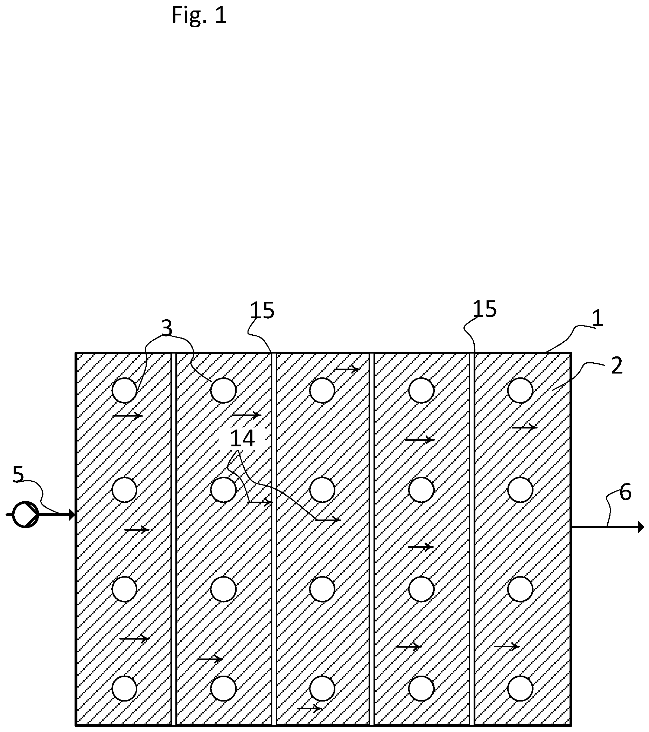

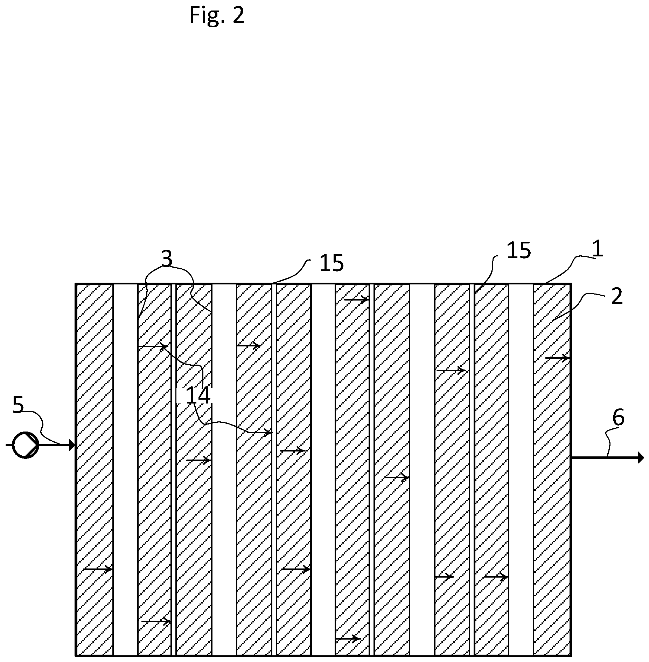

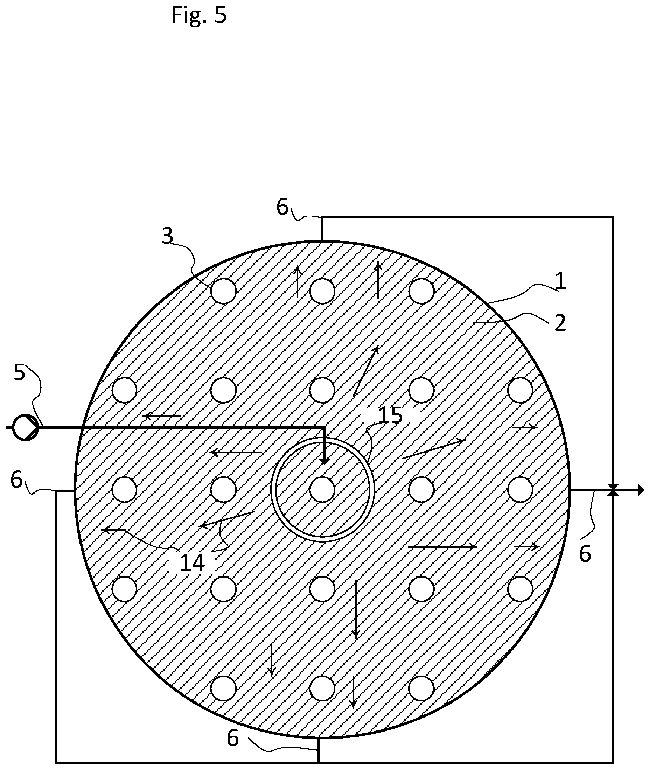

Compressed gas (8), preferably atmospheric air, is injected into the aqueous solution at the bottom of the vertical shafts (9). The shafts (3) may have a cylindrical section form (fig. 1 and 5) or rectangular elongated section form (fig. 2). The cylindrical cross section is well suited for a disc aerator or open tube, whereas the rectangular elongated cross section is more suited for a horizontal pipe or membrane tube aerator.

The gas is removed from the headspace above the solid media (10). The air injection in the vertical shafts creates an upward displacement (11) of the aqueous solution as an airlift pump inside the shafts (3). The air injection in the vertical shafts also creates an effective gas-water interface with high mass transfer efficiency toward water soluble gases inside the shafts (12).

The upward displacement of the aqueous solution inside the vertical shafts (11) creates a downward directed vertical hydraulic pressure gradient through the porous bed of the solid medium outside the vertical shafts (13). This downward pressure gradient is sufficient to bring about submersion of the shaped elements even when their density is slightly lower than that of the solution.

Alternatively, the shafts (3) are open and have no screens at the bottom and the top. In this case, the compressed gas (8) is injected (69) into the aqueous solution above a screen (64), which retains the solid medium at a preferred depth. The air injection (69) creates an upward displacement (61) of the aqueous solution above the screen (64).

The air injection (69) also creates an effective gas-water interface with high mass transfer efficiency toward water soluble gasses in the aqueous solution above the screen (64).

The upward displacement of the aqueous solution (61) above the screen creates a downward directed flow (62) through the vertical shafts (3). Further, the upward displacement of the aqueous solution (61) and the downward directed flow (62) through the vertical shafts (3) creates an upward directed vertical hydraulic pressure gradient (63) through the porous bed of the solid medium outside the vertical shafts.

The shear from the vertical flow may be larger than the gravitational forces on the bed media, thereby fluidizing the bed medium (2) of shaped elements, depending on the vertical hydraulic gradient, the bed medium porosity and the specific density of the bed medium. The bed medium is retained by the screen (64) having a mesh size preventing entrance through the screen of the shaped elements of the porous bed.

The vertical component of the hydraulic pressure gradient is an order of magnitude larger than the horizontal component. The ratio between the relative values of the vertical and the horizontal components of the hydraulic pressure gradient is 5 to 100, preferably 10 to 50.

Short-circuiting of the horizontal flow (14) from inlet to the outlet is prevented by vertical baffles (15) at the top of the bed to dam up the water table (7).

Carbon dioxide ($CO_2$) dissolved in the aqueous solution is transferred to the gas phase through the gas-water interface produced above the points of gas injection. The air injection above the fluidized bed maximizes the available volume for air-water mass transfer, thereby increasing the efficiency of stripping off the dissolved $CO_2$. Incidentally, chlorinated solvents, if present in the aqueous solution, are also effectively stripped off.

The rate of $CaCO_3$ precipitation is accelerated by the removal of dissolved carbon dioxide and is further accelerated (catalysed) by precipitation on a surface coating present on the submerged medium.

The general chemical composition of the surface coating is $Ca\text{-}CO_3$, which may represent variable crystal structures, e.g. of the minerals calcite, aragonite, vaterite, and amorphous $CaCO_3$.

The exact chemical composition of the $CaCO_3$ surface coating may vary due to uptake of trace concentrations of other dissolved species according to the content of the aqueous solution.

The removal of the $CaCO_3$ coating (17) is carried out in the reactor (1) by intermittent injection of compressed air (20) in the porous bed at one or several points (21) thereby creating a strong turbulent circulation inside the porous bed of limited duration.

The air scour removes a fraction of the $CaCO_3$ coating (17) from the surface of the shaped elements. The $CaCO_3$ coating settles to the reactor bottom (22) as separate particles due to a high specific density (approx. 2.6 kg/L).

The settled $CaCO_3$ particles are withdrawn through outlets (23), which have screens (65) of a mesh size allowing the $CaCO_3$ particles to pass but preventing entrance of the shaped elements of the porous bed (2). The outlets are operated intermittently using control valves (24).

The removal of the $CaCO_3$ surface coating (17) might alternatively have been carried out in a separate vessel or reactor (16) as a removal of the coating on a fraction sample of the shaped elements by mechanical forces - preferably hydraulic shear. The fraction sample of the shaped elements preferably would be chosen from the bottom of the porous bed (18). The fraction sample of the shaped elements would be injected at the top of the porous bed (19) after removal of the coating.

The mass and thickness of the coating on the shaped particles will increase during operation of the plant due to deposition of additional $CaCO_3$. The shaped particles with the thickest and heaviest coatings will settle faster and ultimately separate from the remainder of the bed, when the gravitational force becomes larger than the combined force of buoyancy and frictional shear force from the water flow.

The air injection flow (69) may be decreased in intermediate periods, thereby decreasing the upward displacement (61). This will enhance separation of the heaviest of the shaped particles due to the flow velocities decreasing to below the velocity necessary for fluidization.

Operating with the bed of shaped elements in a fluidized state enables recurrent rearranging of the shaped particles according to buoyancy and mass and frictional forces. This can be achieved during normal operation without changing the direction of flow, thereby avoiding strong shear forces and subsequent erosion of coating that releases small particles into the water flow with negative impacts on water quality and turbidity.

The rearrangement operation of the fluidized bed requires an intermediate reduction of the air injection (69), which reduces the upward displacement of the aqueous solution (61) above the screen and the upward directed vertical hydraulic pressure gradient (63) through the porous bed.

Operating in the fluidized mode reduces the risk of mechanical locking and immobilising interaction (bridging) from neighbouring shaped particles.

In the alternative down flow mode (with upward displacement of the aqueous solution inside shafts and a downward directed hydraulic pressure gradient through the bed of shaped elements), rearranging of shaped particles with substantial coating and thus an average density larger than water requires change of flow direction and stronger shear forces due to bridging, thus necessitating taking the reactor off-line during the rearrangement of the bed.

On the other hand, the down flow mode may be suitable for operation under large area and low depth conditions in a reactor. Especially, it is optimal when it comes to refurbishing of open filter systems constructed from reinforced concrete, where the general plant layout is based on a down flow mode.

The water-penetrable and drainable porosity of the submerged solid medium is between 40 and 99 %, preferably 70 - 95 %.

The submerged solid has a surface to bulk volume ratio between 100 and 5000 $m^2/m^3$, preferably 300 - 1200 $m^2/m^3$.

The specific density of the submerged solid is between 0.80 and 1.5 kg/Litre, preferably 0.88 - 0.98 kg/Litre

The modulus of elasticity (Young's Modulus) of the submerged solid is between $0.05 \cdot 10^9$ N/m2 and $5 \cdot 10^9$ N/m2 (GPa), preferably between 0.4 - 4 GPa.

The submerged solid is composed of 80 - 100 % polymeric material, preferably polypropylene or polyethylene (low, medium, or high density).

Precipitation and dissolution of $CaCO_3$ is a surface controlled reaction, which is strongly dependant on the presence and area of a $CaCO_3$ mineral surface and the $CO_2$ partial gas pressure in open systems.

The overall precipitation reaction of $CaCO_3$ from dissolved calcium and bicarbonate ions may be written as $Ca^{2+} + 2\ HCO_3^- \rightarrow CaCO_3 + CO2 + H_2O$.

That reaction includes the dehydration of carbonic acid which is the rate determining process at specific conditions: $H^+ + HCO_3^- \rightarrow H_2CO_3 \rightarrow CO_2 + H_2O$.

Plummer et al. (1978) suggested the following rate law for the precipitation per unit mineral surface area, given by (R < 0 when precipitation occurs):

$$R = k1 \bullet \{H^+\} + k2 \bullet \{H_2CO_3^*\} + k3 - k4 \bullet \{Ca^{2+}\} \bullet \{HCO_3^-\}$$

The constants k1, k2 and k3 are temperature dependent rate constants representing the forward reaction (dissolution), and k4 is a temperature dependant rate constant representing the backward reaction (precipitation), k4 also being strongly dependant on $\{H_2CO_3{}^*\}$, which is the sum of carbonic acid ($H_2CO_3$) and dissolved carbon dioxide ($CO_2$).

It is thus possible to induce supersaturated conditions and ensuing precipitation of $CaCO_3$ from an aqueous solution by lowering the concentration of dissolved $CO_2$ and carbonic acid.

The charge balance of the aqueous solution will result in increasing levels of carbonic acid and dissolved carbon dioxide as the precipitation of $CaCO_3$ proceeds. In a closed system (e.g. a water filled porous bed) this would result in a lowering of the value of the rate constant k4 and thus slowing of the precipitation rate.

The invention utilizes a strong vertical recirculation across the porous bed in order to transfer the produced carbonic acid and dissolved carbon dioxide from the boundary layer at the internal surfaces in the porous bed into the bulk volume of the aqueous solution. The effect of strong agitation and injection of compressed atmospheric air with a low $CO_2$ partial pressure (approx. 400 ppm) is to continuously remove the dissolved carbon dioxide from the aqueous solution.

The effective stripping of carbon dioxide may result in a concentration of dissolved $CO_2$ as low as approx. 1 - 5 mg/L, which makes the precipitation reaction effective at temperatures between 5 - 90 °C, with reaction rates increasing with temperature.

At temperatures relevant in most drinking water production (5-25 °C), the achievable theoretical precipitation rate is in the range 0.04 - 3.6 g $CaCO_3/m^2$/hour).

In experiments with municipal drinking water from Copenhagen at 12 °C it was possible to lower the theoretical calcium carbonate precipitation potential at 90 °C (CCPP90) to below 40 mg/L as calculated by PHREEQC software. This value is suggested by researchers at Kiwa (presently KWRwater) to ensure that no excessive calcium carbonate precipitation occurs in water heating equipment (boilers and heat ex-changers).

The invention is effective for precipitation of calcium carbonate from aqueous solutions of calcium in the range 50 - 3000 mg/L and alkalinity in the range 2.5 - 150 meq/L.

In general, porous bed reactors with a high ratio of $CaCO_3$ surface to the volume of aqueous solution will tend to have a high mass transfer rate per unit volume. However, Dreybrodt et al. (1997) has confirmed experimentally and theoretically that the conversion rate of carbonic acid to dissolved carbon may be the rate limiting step of the precipitation reaction in the pH range 7 - 9.

This is the case when the surface to volume ratio increases above 100 $m^2$ per $m^3$, where the rate of carbonic acid conversion becomes smaller than the surface precipitation rate. Therefore, the precipitation rate law of Plummer et al. (1978) must be modified to account for carbonic acid conversion in technological relevant set-ups.

Furthermore, the overall mass transfer rate per unit volume in the porous bed is strongly influenced by the hydraulics and transport mechanisms in the boundary layer, which separates the bulk fluid volume from the surface of the $CaCO_3$ solids.

Turbulent flow conditions are necessary in order to minimize the limiting effect of mass transfer rates in the boundary layer. The optimum flow conditions correspond to a Reynolds number from approx. 20 and above.

High velocities are necessary to maintain turbulent flow conditions in a porous bed, which in turn normally results in a small hydraulic retention time. However, a high retention time is necessary to reach a technically feasible precipitation rate of $CaCO_3$ without the addition of chemicals.

It is possible to use recirculation of the aqueous solution across the bed, although it may result in a high cross bed pressure loss and a prohibitive energy cost. The main problem with this approach is the cross bed mixing of the aqueous solution, which dampens the spatial gradient of dissolved components across the reactor. A porous bed with a high recirculation will resemble an ideally stirred reactor resulting in lower mass transfer efficiency.

The invention addresses this issue by operating simultaneously with a high vertical cross bed flow rate and a low horizontal flow velocity.

The high vertical cross bed flow rate is induced by the recirculation of the aqueous solution from the bottom to the top of the porous bed, thus maintaining near-turbulent flow conditions in the bed.

The low horizontal flow velocity reflects the pressure difference between the inlet and outlet which is separated horizontally by the porous bed.

The energy consumption from the horizontal pressure loss is negligible compared to the vertical pressure loss as the horizontal flow velocity is much smaller.

The main energy consumption can be ascribed to the air injection, which drives the airlift pump and carbon dioxide stripping from the circulating aqueous solution.

The airlift transforms the general horizontal flow of the porous bed into a number of connected circulating cells giving the reactor a high Peclet number overall. This is optimal in relation to reactor efficiency and energy consumption, as both the efficiency of carbon dioxide stripping as well as the rate of precipitation is driven mainly by the spatial gradient of dissolved components in the aqueous solution.

The energy consumption is minimized by increasing the number of internally circulating cells of the porous bed, the height of the bed, and by adjusting the dimensions of the airlifts to the amount of injected air. The airlift pumps are optimized to deliver the necessary flow and head to maintain turbulent flow conditions in the porous bed, and to create an effective gas-water interface with high mass transfer efficiency toward water soluble gases in the aqueous solution above the screen.

The overall efficiency of energy consumption may be further optimized using several reactors in series, preferably 2 to 5 reactors.

The virgin porous bed is a random packing of shaped elements with a high permeable porosity (larger than 80 %). The high porosity of the random packing contributes to permeability and capacity for PCC coating in the porous bed. As described in the above, the bed may be fluidized, when the plant is operated in an up flow mode.

The shaped elements have approximate dimensions of 3 - 30 mm and are preferably shaped as cylinders or wheels. The size and the shape of the elements determine the specific surface area of the bed. Smaller element size increases the specific surface area but also decreases the necessary mesh size of the grids and increases the head loss energy consumption to drive the flow in the bed.

Elements with additional baffles can increase the specific surface area and still retain a practical element size larger than 3 mm. However, the shape of the elements must also allow turbulent flow and effective mass transfer. A high number of small baffles tend to increase fluid drag and reduce flow velocity near the surface of the elements and thus decrease mass transfer.

The material thickness of the shaped elements must be large enough to ensure sufficient mechanical stability to avoid breakage. Material thickness is on the other hand limited to favour some deformation of the elements by mechanical stress during regeneration and removal of PCC coating. The shaped elements may have additional corrugations or cuts in order to enhance flexible reversible deformation. Typical material thickness for elements made of polypropylene and polyethylene is in the range 0.2 - 1.0 mm. The elements are preferably produced from raw materials suitable for contact to potable water.

The virgin porous bed is seeded in situ with a coating of $CaCO_3$ by continuous addition of stoichiometric amounts of highly soluble calcium and bicarbonate salts e.g. calcium chloride ($CaCl_2$) and soda ($Na\text{-}HCO_3$) to the aqueous solution. The aqueous solution becomes highly supersaturated with respect to calcium carbonate which precipitates accordingly:

$$CaCl_2 + 2\ NaHCO_3 \rightarrow CaCO_3 + CO_2 + 2\ Na^+ + 2\ Cl^- + H_2O$$

The airlifts are operated continuously during seeding. This maintains the supersaturation by removing the dissolved carbon dioxide which is produced by the calcium carbonate precipitation reaction as well as maintaining the optimum hydraulic conditions giving a high mass transfer efficiency.

Initially, the supersaturated solution results in both homogenous precipitation of calcium carbonate colloidal particles in suspension and heterogeneous precipitation (catalytic) on the surface of the porous bed. The precipitated colloidal calcite and aragonite particles are removed continuously by filtration of the effluent (6) from the reactor before returning the effluent to the reactor inlet (5).

The importance of colloidal precipitation will decline as the seeding proceeds due to the formation of coatings on the porous bed, which strongly favours the catalytic precipitation path. Some exchange of the aqueous solution with fresh water is carried out to maintain the salt concentration at an acceptable level (< 3 %).

The continuous air lift operation raises the temperature of the circulating aqueous solution due to the heat energy of the compressed air. The heating of the solution enhances the precipitation reactions.

After the seeding is ended, the porous bed is flushed with water to remove any remaining colloids and loose precipitates and operation is started.

In normal operation and depending on media as well as bed depth, the airflow will be in the range 25 - 100 $m^3/m^2$ reactor/hour. The airlifts generate a water flow 2 - 3 times the air flow i.e. filtration velocities of 75 - 300 m/h. The energy efficiency of airlift pumping action and carbon dioxide removal depends on the necessary head delivered and the frictional head loss in the porous bed.

An elongated rectangular form of the shaft (3) is well suited to minimize back mixing between the circulating cells when used together with baffles extending wall to wall in the reactor (fig. 2). Minimizing back mixing enhances reactor hydraulics (higher Peclet number) and contributes to higher energy efficiency.

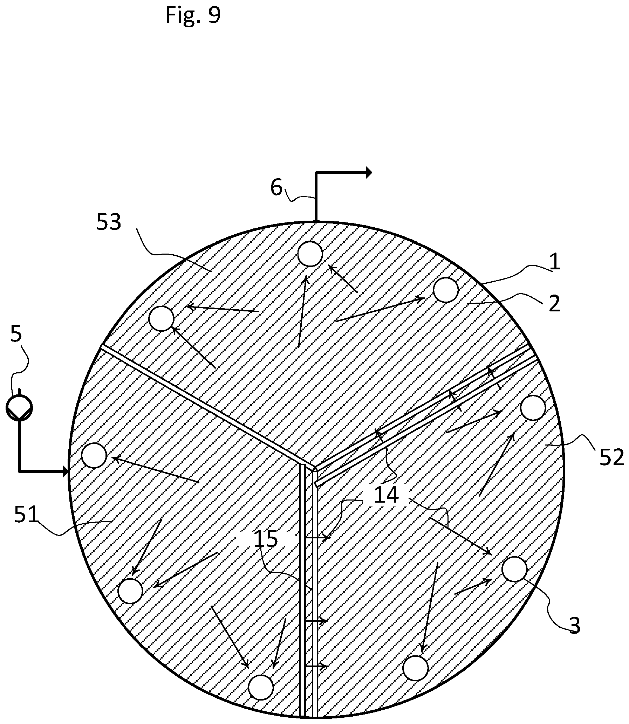

The box-shaped reactor form (fig. 1 and fig. 2) is well suited for reinforced concrete constructions and optimum footprint of buildings, whereas cylindrical reactors (fig. 5 and fig. 9) are economical feasible using mild or stainless steel.

The precipitated calcium carbonate is generally the mineral calcite.

However, iron and manganese are effectively and preferentially removed in the early phase of the precipitation process resulting in a changing cross bed quality of the PCC.

The PCC is produced in the form of flakes, as the growing coating is removed from the surface of the shaped elements in the porous bed. The flake size is determined by the morphology of the shaped elements, and the thickness of the flakes is determined i.a. by the time interval between with drawings of the precipitate.

The porous bed is mature, when the net buoyancy of the virgin material is lost - i.e. the combined density of the shaped elements and coating in the bed is larger than water.

A bed of polyethylene shaped elements with 90 % porosity and a 0.95 kg/L specific density of the virgin material ($CaCO_3$ density is 2.6 kg/L) will lose the buoyancy and become mature when the coating volume reaches 0.3 % of the total bed volume.

The operation is maintained adjusting hydraulic load and air injection to the desired PCC production and water quality. The precipitation range 0.04 - 3.6 g $CaCO_3/m^2$/hour corresponds to a rate of coating thickness increase of 0.4 - 30 μm/day.

Depending on the bed material elasticity, the optimum coating volume before regeneration is 1 - 3 % of total bed volume. The separation of the coating by mechanical force is facilitated by the large difference in the elasticity properties of the bed and the coating. The precipitated calcium carbonate (calcite) has a Young's modulus in the range 70 - 90 GPa which is more than an order of magnitude larger than the Young's modulus of the shaped elements in the porous bed according to a preferred embodiment of the invention (0.4 - 4 GPa).

The coating is separated by mechanical force using e.g. hydrodynamic shear, mechanical stress or ultrasonic waves. The stress force combined with the differences in elasticity properties creates different deformation of shaped element surface and coating which thus separates.

In one embodiment, air scour outside the airlift shafts is used to agitate the bed by collapsed air pulsing which forces the individual elements to collide with a high frequency. The air scour flow is 10 - 200 $m^3$/h per $m^2$ reactor area.

During air scour, the normal operation of the reactor is stopped by closing influent and effluent as well as stopping the air lifts.

When the PCC coating is separated from the bed elements, it tends to separate from the flow and settle to the reactor bottom due to the high specific density, whereas the retained cleaned bed elements regain their buoyancy and are driven upward in the bed.

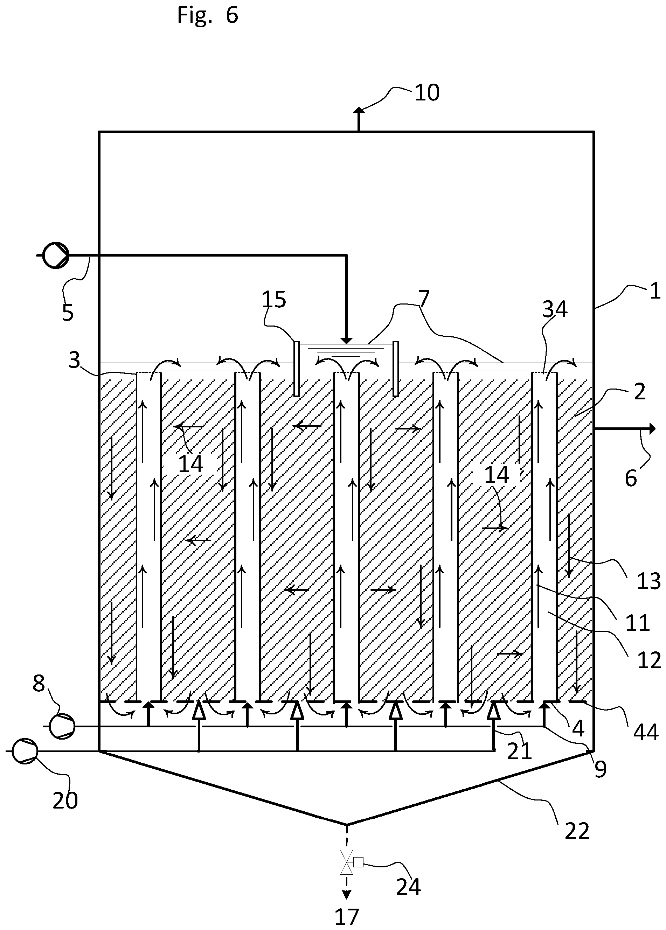

In this operation, the PCC is withdrawn through screened outlets in the bottom or from a central hopper bottom outlet if the construction permits (e.g. fig. 6 cylindrical reactor with grid bottom).

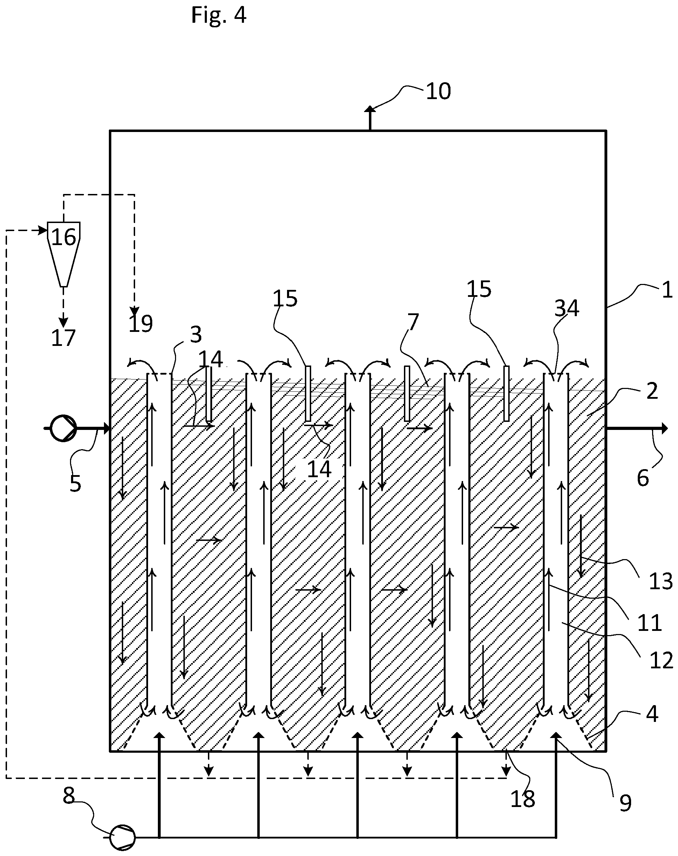

The PCC may alternatively be separated by ultrasonic waves emitted directly into the reactor or in a separate vessel (16, fig.4).

The invention will now be illustrated by way of the following non-limiting examples.

Example 1 - General test in down flow mode

In this example, an embodiment with upward displacement of the aqueous solution inside the shafts and a corresponding downward directed vertical hydraulic pressure gradient through the bed of shaped elements outside the vertical shafts was tested.

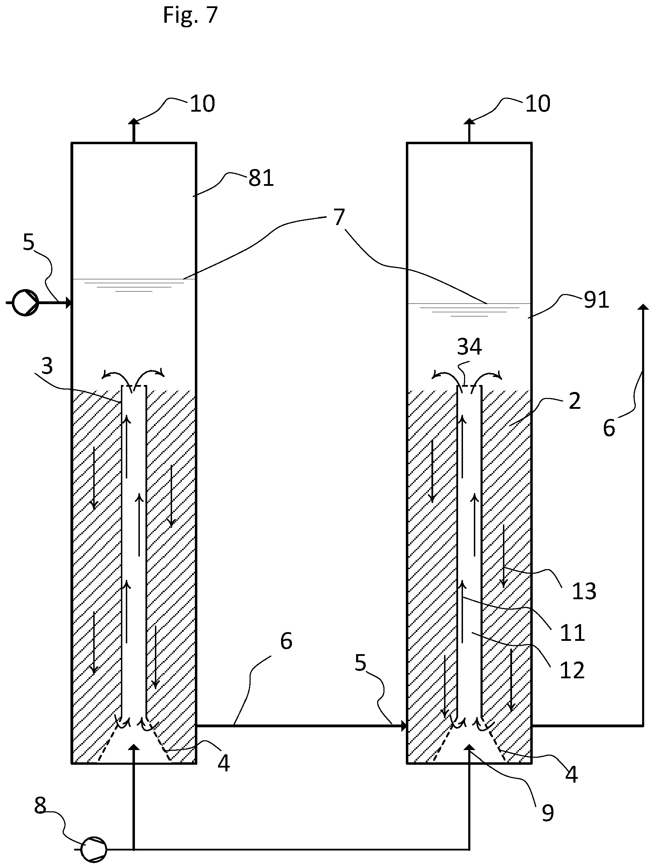

The following test results were obtained on a 0.1 $m^3$/hour test rig (fig. 7) operating on tap water from the Hofor water company (Greater Copenhagen Municipality).

The influent water temperature was 11 - 15 °C, total hardness 19 - 21 °dH (German hardness degrees, calcium approx. 110 mg/L and magnesium 19 mg/L), alkalinity 3.5 - 3.7 meq/L, pH (25 °C) 7.2-7.3, conductivity (25 °C) 730-810 μS/cm.

Two reactors in series were used, each reactor with one airlift pump (shaft and air diffusor). The airlift shafts had an inner diameter of 160 mm and length of 500 mm. Air was delivered by a side-channel blower to an EPDM membrane disc aerator placed at the bottom of the airlift. Mesh size of grid on the airlift bottom intake was 6 mm.

The air-water injection ratio in each reactor was 100 - 200 $m^3$ of air per $m^3$ water. The bed volume was 0.08 $m^3$ in each reactor, bed height 350 mm.

Reactor 81 had a bed of cylindrical or wheel shaped elements made of virgin polypropylene (specific density of approximately 0.92 kg/L), approximate size was (diameter) 12 mm by (length) 8 mm, specific surface approximately 850 $m^{-1}$, and porosity of 87 % (per cent).

Reactor 91 had a bed of cylindrical or wheel shaped elements made of high density polyethylene (specific density of approximately 0.95 kg/L), approximate size was (diameter) 10 mm by (length) 8 mm, specific surface approximately 500 $m^{-1}$, and porosity of 93 % (per cent).

Samples of the shaped elements where manually extracted during testing for regeneration. The shaped elements where selected according to buoyancy - only elements with enough precipitates to have lost buoyancy was selected. The PCC was separated from the (porous bed) elements by shaking or stirring in a beaker with a lid. A small ultrasonic batch generator was also effective for the separation of the PCC.

Table 1. Test results from 2 reactors in series (alk: alkalinity, cond: conductivity at 25 °C, Air Flow: The air flow in each air lift. Water Flow: The flow through the system as measured at the inlet, fig. 7).

| | Air Flow | Water Flow | Inlet Reactor 81 | | | Outlet Reactor 81 | | | Hardness removed in Reactor 81 | | Outlet Reactor91 | | | Hardness removed in Reactor 91 | |
|---|---|---|---|---|---|---|---|---|---|---|---|---|---|---|---|
| | | | pH | Cond. | Alk. | pH | Cond | Alk. | | | pH | Cond. | Alk. | | |
| day | $m^3/h$ | [L/h] | - | µS/cm | meq/L | - | µS/cm | meq/L | °dH | $gCaCO_3/h$ | - | µS/cm | meq/L | °dH | $gCaCO_3/h$ |
| 1 | 10 | 133 | 7.28 | 728 | 5.58 | 8.35 | 713 | 4.82 | 2,1 | 5.1 | 8.31 | 657 | 4.02 | 2.2 | 5.3 |
| 5 | 10 | 144 | 7.28 | 782 | 5.58 | 8.22 | 737 | 5.12 | 1.3 | 3.3 | 8.18 | 689 | 4.57 | 1.5 | 4.0 |
| 10 | 10 | 97 | 7.27 | 791 | 5.53 | 8.25 | 723 | 4.67 | 2.4 | 4.2 | 8.29 | 657 | 3.73 | 2.6 | 4.6 |
| 14 | 10 | 106 | 7.31 | 769 | 5.42 | 8.32 | 698 | 4.60 | 2.3 | 4.3 | 8.30 | 641 | 3.73 | 2.4 | 4.6 |
| 19 | 10 | 99 | 7.27 | 768 | 5.62 | 8.17 | 683 | 4.46 | 3.3 | 5.7 | 8.16 | 627 | 3.74 | 2.0 | 3.6 |
| 19 | 10 | 99 | 7.21 | 778 | 5.60 | 8.19 | 707 | 4.53 | 3.0 | 5.3 | 8.16 | 648 | 3.64 | 2.5 | 4.4 |
| 24 | 12 | 95 | 7.19 | 791 | 5.64 | 8.19 | 689 | 4.14 | 4.2 | 7.1 | 8.19 | 628 | 3.49 | 1.8 | 3.1 |
| 27 | 12 | 96 | 7.16 | 783 | 5.60 | 8.14 | 693 | 4.19 | 4.0 | 6.8 | 8.13 | 636 | 3.53 | 1.9 | 3.2 |
| 28 | 12 | 99 | 7.15 | 790 | 5.64 | 8.15 | 680 | 4.01 | 4.6 | 8.1 | 8.15 | 621 | 3.30 | 2.0 | 3.5 |
| 29 | 12 | 100 | 7.18 | 777 | 5.58 | 8.15 | 676 | 3.97 | 4.5 | 8.1 | 8.16 | 620 | 3.30 | 1.9 | 3.4 |
| 32 | 12 | 53 | 7.23 | 780 | 5.62 | 8.24 | 641 | 3.55 | 5.8 | 5.5 | 8.31 | 614 | 3.12 | 1.2 | 1.1 |
| 39 | 12 | 100 | 7.22 | 779 | 5.67 | 8.16 | 669 | 3.97 | 4.8 | 8.5 | 8.19 | 611 | 3.31 | 1.9 | 3.3 |
| 41 | 12 | 96 | 7.30 | 753 | 5.57 | 8.15 | 660 | 4.06 | 4.2 | 7.2 | 8.18 | 612 | 3.30 | 2.1 | 3.6 |
| 42 | 12 | 96 | 7.23 | 776 | 5.58 | 8.20 | 676 | 3.90 | 4.7 | 8.1 | 8.23 | 619 | 3.18 | 2.0 | 3.5 |

Example 2 - Characterization of precipitate

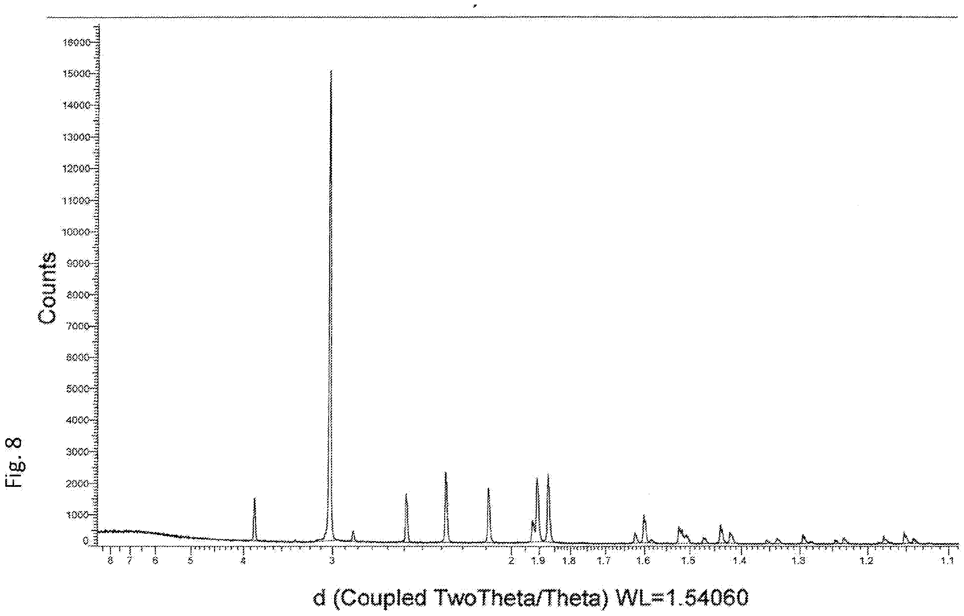

A specimen of precipitate produced in the test of Example 1 was identified as pure calcite by X-ray diffraction (XRD with strong calcite line d = 3.035 Å, fig. 8). The XRD indicates a very well ordered crystal structure with a low content of impurities.

Example 3 - Upscaled test

A test of the method according to the invention was run on groundwater from Copenhagen in a reactor with a 2.2 $m^3$ bed of shaped elements (bulk specific surface area 800 $m^2/m^3$). The shaped elements were of the type described in Example 1.

| Water flow ($m^3/h$) | | 0.82 | | 1.00 | | 1.50 | | 0.40 | |
|---|---|---|---|---|---|---|---|---|---|
| Air flow ($m^3/h$) | | 124 | | 124 | | 124 | | 124 | |
| Sample location on reactor | | Inlet | Outlet | Inlet | Outlet | Inlet | Outlet | Inlet | Outlet |
| Temperature | °C | 10.1 | 11.0 | 10.2 | 10.1 | 10.3 | 9.7 | 11.0 | 12.3 |
| pH | pH | 7.75 | 8.12 | 7.5 | 8.1 | 7.8 | 8.2 | 7.3 | 7.9 |
| Turbidity | FNU | 0.05 | <0.05 | <0.05 | <0.05 | <0.05 | <0.05 | 0.05 | <0.05 |
| Hardness, total | °dH | 28.4 | 21.2 | 28.4 | 21.4 | 28.6 | 24.4 | 28.4 | 19.4 |
| Calcium, Ca++ | mg/l | 160 | 110 | 160 | 110 | 160 | 130 | 160 | 96 |
| Magnesium, $Mg^{++}$ | mg/l | 26 | 25 | 26 | 26 | 27 | 27 | 26 | 26 |
| Potassium, K+ | mg/l | 4.3 | 4.1 | 4.2 | 4.2 | 4.4 | 4.5 | 4.1 | 4.2 |
| Sodium, Na+ | mg/l | 52 | 52 | 52 | 52 | 55 | 55 | 51 | 53 |
| Iron, Fe | mg/l | 0.02 | <0.01 | <0.01 | <0.01 | <0.01 | <0.01 | 0.03 | <0.01 |
| Manganese, Mn | mg/l | 0.004 | <0.001 | 0.005 | <0.001 | 0.002 | <0.001 | 0.004 | <0.001 |
| Ammonia, NH4+ | mg/l | 0.084 | 0.045 | 0.036 | 0.005 | 0.061 | <0.004 | 0.052 | 0.011 |
| Nitrite, NO2- | mg/l | 0.017 | 0.015 | 0.0092 | 0.022 | 0.019 | 0.005 | 0.013 | 0.0053 |
| Nitrate, NO3- | mg/l | 1.1 | 1.6 | 1.2 | 1.7 | 1.3 | 1.4 | 1.8 | 2.3 |
| Total phosphor, P | mg/l | <0.0030 | 0.013 | <0.0030 | 0.018 | <0.0030 | <0.0030 | <0.0030 | <0.0030 |
| Chloride, Cl- | mg/l | 140 | 150 | 140 | 140 | 136 | 140 | 140 | 140 |
| Fluoride, F- | mg/l | 0.45 | 0.39 | 0.46 | 0.40 | 0.45 | 0.41 | 0.44 | 0.38 |
| Sulphate, SO4-- | mg/l | 150 | 150 | 150 | 150 | 150 | 150 | 150 | 150 |
| Alkalinity | mmol/l | 6.0 | 3.4 | 6.2 | 3.8 | 6.0 | 4.2 | 6.2 | 2.8 |
| Hydrogen carbonate, HCO3- | mg/l | 370 | 210 | 380 | 230 | 370 | 260 | 380 | 170 |
| Non-volatile organic carbon | mg/l | 1.9 | 2.0 | 2.3 | 1.7 | 1.8 | 1.7 | 1.6 | 1.5 |
| Barium, Ba | µg/l | 51 | 44 | 51 | 44 | 52 | 46 | 55 | 45 |
| Lead, Pb | µg/l | 0.032 | <0.025 | 0.040 | <0.025 | 0.026 | <0.025 | 0.046 | 0.071 |
| Chrome, Cr | µg/l | 0.046 | 0.041 | 0.16 | 0.034 | 0.045 | 0.033 | 0.61 | 0.033 |
| Cupper, Cu | µg/l | 1.1 | 0.35 | 1.1 | 0.38 | 0.77 | 0.34 | 1.9 | 1.5 |

(continued)

| Water flow ($m^3/h$) | | 0.82 | | 1.00 | | 1.50 | | 0.40 | |
|---|---|---|---|---|---|---|---|---|---|
| Air flow ($m^3/h$) | | 124 | | 124 | | 124 | | 124 | |
| Sample location on reactor | | Inlet | Outlet | Inlet | Outlet | Inlet | Outlet | Inlet | Outlet |
| Nickel, Ni | μg/l | 14 | 10 | 14 | 10 | 14 | 11 | 15 | 7.7 |
| Strontium, Sr | μg/l | 4000 | 3800 | 3900 | 3700 | 3800 | 3600 | 3900 | 3700 |
| Zinc, Zn | μg/l | 21 | 3.6 | 19 | 3.8 | 21 | 3.3 | 22 | 6.4 |
| Trichlorethene | μg/l | 6.4 | 0.36 | 6.1 | 0.47 | 5.1 | 0.51 | 2.1 | 0.057 |
| Tetrachlorethene | μg/l | 0.18 | <0.020 | 0.17 | <0.020 | 0.16 | <0.020 | 0.070 | <0.020 |
| trans-1,2- dichlorethene | μg/l | 0.22 | <0.020 | 0.23 | <0.020 | 0.24 | <0.020 | 0.088 | <0.020 |
| cis-1,2-dichlorethene | μg/l | 2.3 | 0.22 | 2.2 | 0.27 | 2.0 | 0.32 | 0.80 | 0.037 |
| 1,2-dichlorethane | μg/l | <0.020 | <0.020 | 0.51 | 0.15 | 0.52 | 0.19 | 0.22 | <0.020 |

References

Softening - TU Delft OpenCourseWare https://ocw.tudelft.nl/wp-content/uploads/Softening-1.pdf

Plummer L. N., Wigley T. L. M., and Parkhurst D. L. (1978) The kinetics of calcite dissolution.. Amer. J. Sci. 278, 537-573.

Dreybrodt, W., Eisenlohr, L., Madry, B. & Ringer, S. 1997: Precipitation kinetics of calcite in the system: CaCO3 - H2O - CO2: The conversion to CO2 by the slow process H+ + HCO3- + CO2 + H2O as a rate limiting step. Geochimica et Cosmochimica Acta 60, 3897-3904.

Van Raalte-Drewes et al. (2004): Scaling Propensity of Water - new Predictive Parameters. Kiwa©, IWA publishing, 30 pp.

Parkhurst D.L and Appello C.A.J (2013): Description of Input and Examples for PHREEQC Version 3 - A Computer Program for Speciation, Batch-Reaction, One-Dimensional Transport, and Inverse Geochemical Calculations. https://wwwbrr.cr.usgs.gov/projects/GWC_coupled/phreeqc/

**Claims**

**1.** A method for production of precipitated calcium carbonate (PCC), said method comprising the steps of:

- providing an aqueous solution of calcium, carbon dioxide, bicarbonate, and carbonate;
- providing at least one reactor (1) containing a bed (2) of shaped elements, said elements being prepared from a material showing a lower modulus of elasticity than precipitated calcium carbonate, and a number of vertical shafts (3) extending from the bottom region of said reactor to at least the top of said bed;
- introducing said solution through an inlet (5) to said at least one reactor and withdrawing the solution from the reactor from an outlet (6) horizontally separated from the inlet, thereby creating a horizontal flow (14) and a corresponding horizontal hydraulic pressure gradient through the bed of shaped elements;
- injecting a compressed gas (8) into the aqueous solution to effect

  i) a displacement of the aqueous solution inside the shafts and a corresponding oppositely directed vertical hydraulic pressure gradient through the bed of shaped elements outside the vertical shafts, and
  ii) a gas-water interface to drive off carbon dioxide dissolved in the aqueous solution;

- removing gas including driven off carbon dioxide from a headspace above the bed of shaped elements (10);
- removing by non-chemical means a surface coating precipitated on at least a part of the shaped elements, when a target thickness of said coating has been obtained, the coating consisting substantially of calcium carbonate.

**2.** The method according to claim 1, wherein said shafts (3) extend from the bottom of the reactor and are perforated in their bottom region (4) with a mesh size preventing said shaped elements from entering the shafts, and the compressed gas (8) is injected into the aqueous solution at the bottom of the vertical shafts to effect

i) an upward displacement (11) of the aqueous solution inside the shafts and a corresponding downward directed vertical hydraulic pressure gradient through the bed of shaped elements outside the vertical shafts (13), and
ii) a gas-water interface inside the shafts (12) to drive off carbon dioxide dissolved in the aqueous solution.

**3.** The method according to claim 2, wherein the shaped elements are further prevented from entering the vertical shafts by screens provided at the top openings of the shafts.

**4.** The method according to claim 1, wherein the compressed gas (8) is injected into the aqueous solution (69) above a screen (64), said screen retaining the bed (2) of shaped elements at a level below a water surface of the aqueous solution, to effect

i) an upward displacement (61) of the aqueous solution above the screen (64), a downward displacement (62) of the aqueous solution inside the shafts, and a corresponding upward directed vertical hydraulic pressure gradient through the bed of shaped elements outside the vertical shafts (63), and
ii) a gas-water interface in the aqueous solution above the screen (64) to drive off carbon dioxide dissolved in the aqueous solution.

**5.** The method according to any one of the preceding claims, wherein the number of vertical shafts per reactor is 1, 2, 3, or more.

**6.** The method according to any one of the preceding claims, wherein the ratio between the respective magnitudes of the vertical and the horizontal hydraulic pressure gradients in the bed of shaped elements amounts to 5 to 100, preferably 10 to 50.

**7.** The method according to any one of the preceding claims, wherein the surface coating on the shaped elements is removed continuously or intermittently to balance the addition of mass from the precipitation.

**8.** The method according to claim 7, wherein coating is removed from the surface of shaped elements in the reactor by intermittent injection of compressed air (20) in the bed of shaped elements at one or several points (21), said injection provoking an air scour that detaches coating as separate particles, which due to a high specific density settle at the reactor bottom (22), from where they are withdrawn through one or more outlets (23).

**9.** The method according to claim 7, wherein coating is removed from the surface of a fraction sample of shaped elements, preferably chosen from the bottom of the bed of shaped elements, in a separate vessel or reactor (16), such as a hydrocyclone, by mechanical forces, preferably hydraulic shear, and/or ultrasound, whereafter said fraction sample of shaped elements are reintroduced (19) to the top of the bed of shaped elements in the reactor.

**10.** The method according to any of the previous claims, wherein said compressed gas is atmospheric air.

**11.** The method according to any of the previous claims, wherein no extraneous chemicals are added to the aqueous solution of dissolved calcium, carbon dioxide, bicarbonate and carbonate.

**12.** The method according to any of the previous claims, wherein the aqueous solution is subjected in the reactor to an essentially non-biological treatment only.

**13.** The method according to any of the previous claims, wherein the aqueous solution is ground water or surface water with an inherent content of dissolved calcium, carbon dioxide, bicarbonate and carbonate.

**14.** The method according to any of the previous claims, wherein at least a fraction of the bed of shaped elements has been seeded with calcium carbonate before introduction of the solution to the reactor in order to catalyze the precipitation of surface coating on the shaped elements.

**15.** The method according to any of the previous claims, wherein the specific density of the shaped elements is between 0.80 and 1.5 kg/L, preferably 0.88-0.98 kg/L.

**16.** The method according to any of the previous claims, wherein the modulus of elasticity (Young's Modulus) of the shaped elements is between $0.05\text{-}10^9$ N/m$^2$ and $5.10^9$ N/m$^2$ (GPa), preferably between 0.4 and 4 GPa.

**17.** The method according to any of the previous claims, wherein the shaped elements are composed of 80-100 % polymeric material, preferably polypropylene or polyethylene (low, medium, or high density).

**18.** A plant for production of precipitated calcium carbonate (PCC) according to the method of claim 1, said plant comprising at least one reactor comprising:

- a bed (2) of shaped elements, said elements being prepared from a material showing a lower modulus of elasticity than precipitated calcium carbonate;
- 1, 2, 3 or more vertical shafts (3) extending from the bottom region of said reactor to at least the top of said bed;
- an inlet (5) and an outlet (6) for an aqueous solution, horizontally spaced apart;
- at least one inlet for injection of a compressed gas (8) into the aqueous solution;

- an outlet (10) to remove gas from a headspace above the bed of shaped elements;
- at least one inlet (21) for injection of compressed air (20) for removal of a coating from the surface of the shaped elements, said coating substantially consisting of precipitated calcium carbonate; and
- at least one outlet (23) for withdrawal of settled particles of calcium carbonate, being provided with a screen of a mesh size large enough to let the settled particles pass but smaller than the smallest diameter of the shaped elements, and being operated by at least one control valve (24).

**19.** The plant according to claim 18, wherein said shafts (3) extend from the bottom of the reactor to the top of said bed (2) and are perforated in their bottom region (4) with a mesh size smaller than the smallest diameter of the shaped elements and being likewise provided with a screen at their top opening end having a mesh size smaller than the smallest diameter of the shaped elements; and
wherein the at least one inlet for injection of a compressed gas (8) is for injection of the compressed gas into the aqueous solution at the bottom of the vertical shafts (9).

**20.** The plant according to claim 18, further comprising a screen (64) above the bed (2) of shaped elements, said screen having a mesh size smaller than the smallest diameter of the shaped elements; and
wherein the at least one inlet for injection of a compressed gas into the aqueous solution is located above said screen (64).

**21.** The plant according to claims 18 to 20, being further provided with one or more vertical baffles (15) in order to bank up any aqueous solution flowing above the bed of shaped elements, thus preventing short-circuiting of the horizontal flow (14) through said bed from the inlet (5) to the outlet (6), wherein the baffles optionally span the top of the bed of shaped elements from a wall of the reactor to the opposite wall.

**22.** The plant according to claim 18 to 21, wherein the vertical shafts are substantially cylindrical.

**23.** The plant according to any one of claims 18 to 22, wherein the reactor is substantially cylindrical.

**24.** The plant according to any one of claims 18 to 22, wherein the reactor is shaped in the form of a box.

**25.** The plant according to claim 24, wherein the vertical shafts are formed as rectangular or laminar bodies and span the reactor from one wall to the opposite wall.

**26.** The plant according to any one of claims 18 to 25, said plant comprising several serially connected reactors.

**Patentansprüche**

**1.** Verfahren zur Herstellung von gefälltem Calciumcarbonat (PCC), das Verfahren die folgenden Schritte umfassend:

- Bereitstellen einer wässrigen Lösung von Calcium, Kohlendioxid, Bicarbonat und Carbonat;
- Bereitstellen mindestens eines Reaktors (1), der ein Bett (2) geformter Elemente enthält, wobei die Elemente aus einem Material, das ein niedrigeres Elastizitätsmodul als gefälltes Calciumcarbonat zeigt, hergestellt sind, und einer Anzahl vertikaler Schächte (3), die sich aus dem Bodenbereich des Reaktors bis mindestens an die Oberseite des Betts erstrecken;
- Einführen der Lösung durch einen Einlass (5) in den mindestens einen Reaktor und Ausleiten der Lösung aus dem Reaktor aus einem Auslass (6), der von dem Einlass horizontal separiert ist, wodurch eine horizontale Strömung (14) und ein entsprechender horizontaler hydraulischer Druckgradient durch das Bett geformter Elemente erzeugt wird;
- Injizieren eines komprimierten Gases (8) in die wässrige Lösung, um Folgendes zu bewirken:

  i) eine Verdrängung der wässrigen Lösung innerhalb der Schächte und eines entsprechenden entgegengesetzt gerichteten vertikalen hydraulischen Druckgradienten durch das Bett geformter Elemente außerhalb der vertikalen Schächte und
  ii) eine Gas-Wasser-Schnittstelle, um Kohlendioxid auszutreiben, das in der wässrigen Lösung gelöst ist;

- Entfernen von Gas, das ausgetriebenes Kohlendioxid aus einem Kopfraum oberhalb des Betts geformter Elemente (10) umfasst;

- Entfernen durch nicht chemische Mittel einer Oberflächenbeschichtung, die auf mindestens einem Teil der geformten Elemente ausgefällt wurde, wenn eine Zieldicke der Beschichtung erreicht wurde, wobei die Beschichtung im Wesentlichen aus Calciumcarbonat besteht.

**2.** Verfahren nach Anspruch 1, wobei die Schächte (3) sich aus dem Boden des Reaktors erstrecken und in ihrem Bodenbereich (4) mit einer Maschenweite perforiert sind, die verhindert, dass die geformten Elemente in die Schächte gelangen, und das komprimierte Gas (8) wird an dem Boden der vertikalen Schächte in die wässrige Lösung injiziert, um Folgendes zu bewirken:

i) eine aufwärts gerichtete Verdrängung (11) der wässrigen Lösung innerhalb der Schächte und einen entsprechenden abwärts gerichteten vertikalen hydraulischen Druckgradienten durch das Bett geformter Elemente außerhalb der vertikalen Schächte (13) und
ii) eine Gas-Wasser-Schnittstelle im Inneren der Schächte (12), um Kohlendioxid auszutreiben, das in der wässrigen Lösung gelöst ist.

**3.** Verfahren nach Anspruch 2, wobei durch Siebe, die an den oberen Öffnungen der Schächte bereitgestellt sind, weiterhin verhindert wird, dass die geformten Elemente in die vertikalen Schächte gelangen.

**4.** Verfahren nach Anspruch 1, wobei das komprimierte Gas (8) oberhalb eines Siebs (64) in die wässrige Lösung (69) injiziert wird, wobei das Sieb das Bett (2) geformter Elemente auf einem Pegel unter einer Wasseroberfläche der wässrigen Lösung hält, um Folgendes zu bewirken:

i) eine aufwärts gerichtete Verdrängung (61) der wässrigen Lösung oberhalb des Siebs (64), eine abwärts gerichtete Verdrängung (62) der wässrigen Lösung innerhalb der Schächte und einen entsprechenden aufwärts gerichteten vertikalen hydraulischen Druckgradienten durch das Bett geformter Elemente außerhalb der vertikalen Schächte (63) und
ii) eine Gas-Wasser-Schnittstelle in der wässrigen Lösung über dem Sieb (64), um Kohlendioxid auszutreiben, das in der wässrigen Lösung gelöst ist.

**5.** Verfahren nach einem der vorhergehenden Ansprüche, wobei die Anzahl vertikaler Schächte pro Reaktor 1, 2, 3 oder mehr ist.

**6.** Verfahren nach einem der vorhergehenden Ansprüche, wobei das Verhältnis zwischen den jeweiligen Größenordnungen des vertikalen und des horizontalen hydraulischen Druckgradienten in dem Bett geformter Elemente 5 bis 100, vorzugsweise 10 bis 50, beträgt.

**7.** Verfahren nach einem der vorhergehenden Ansprüche, wobei die Oberflächenbeschichtung auf den geformten Elementen kontinuierlich oder unstetig entfernt wird, um die Hinzufügung von Masse aus der Ausfällung auszugleichen.

**8.** Verfahren nach Anspruch 7, wobei eine Beschichtung von der Oberfläche geformter Elemente in dem Reaktor durch unstetige Injektion komprimierter Luft (20) in das Bett geformter Elemente an einem oder an mehreren Punkten (21) entfernt wird, wobei die Injektion eine Luftspülung provoziert, die eine Beschichtung als separate Teilchen ablöst, die sich aufgrund einer hohen spezifischen Dichte auf dem Reaktorboden (22) absetzen, von wo sie durch einen oder mehrere Auslässe (23) ausgeleitet werden.

**9.** Verfahren nach Anspruch 7, wobei eine Beschichtung von der Oberfläche einer Teilprobe geformter Elemente, die vorzugsweise von dem Boden des Betts geformter Elemente ausgewählt wird, in einem separaten Behälter oder Reaktor (16), wie beispielsweise in einem Hydrozyklon, durch mechanische Kräfte, vorzugsweise durch hydraulische Scherung, und/oder durch Ultraschall entfernt wird, wonach die Teilprobe geformter Elemente auf die Oberseite des Betts geformter Elemente in den Reaktor zurückgeführt wird (19).

**10.** Verfahren nach einem der vorhergehenden Ansprüche, wobei das komprimierte Gas atmosphärische Luft ist.

**11.** Verfahren nach einem der vorhergehenden Ansprüche, wobei keine Fremdchemikalien zu der wässrigen Lösung aus gelöstem Calcium, Kohlendioxid, Bicarbonat und Carbonat hinzugefügt werden.

**12.** Verfahren nach einem der vorhergehenden Ansprüche, wobei die wässrige Lösung in dem Reaktor nur einer im Wesentlichen nicht biologischen Behandlung unterzogen wird.

**13.** Verfahren nach einem der vorhergehenden Ansprüche, wobei die wässrige Lösung Grundwasser oder Oberflächenwasser mit einem inhärenten Gehalt an gelöstem Calcium, Kohlendioxid, Bicarbonat und Carbonat ist.

**14.** Verfahren nach einem der vorhergehenden Ansprüche, wobei mindestens ein Teil des Betts geformter Elemente vor Einführung der Lösung in den Reaktor mit Calciumcarbonat geimpft wurde, um die Ausfällung der Oberflächenbeschichtung auf den geformten Elementen zu katalysieren.

**15.** Verfahren nach einem der vorhergehenden Ansprüche, wobei die spezifische Dichte der geformten Elemente zwischen 0,80 und 1,5 kg/l, vorzugsweise zwischen 0,88 und 0,98 kg/l liegt.

**16.** Verfahren nach einem der vorhergehenden Ansprüche, wobei der Elastizitätsmodul (Young'scher Modul) der geformten Elemente zwischen 0,05. $10^9$ N/$m^2$ und 5 · $10^9$ N/$m^2$ (GPa), vorzugsweise zwischen 0,4 und 4 GPa, liegt.

**17.** Verfahren nach einem der vorhergehenden Ansprüche, wobei die geformten Elemente aus 80 bis 100 % Polymermaterial, vorzugsweise Polypropylen oder Polyethylen (geringer, mittlerer oder hoher Dichte) zusammengesetzt sind.

**18.** Anlage zur Herstellung von gefälltem Calciumcarbonat (PCC) gemäß dem Verfahren nach Anspruch 1, die Anlage mindestens einen Reaktor umfassend, der Folgendes umfasst:

- ein Bett (2) geformter Elemente, wobei die Elemente aus einem Material hergestellt sind, das ein niedrigeres Elastizitätsmodul als gefälltes Calciumcarbonat zeigt;
- 1, 2, 3 oder mehr vertikale Schächte (3), die sich aus dem Bodenbereich des Reaktors zu mindestens der Oberseite des Betts erstrecken;
- einen Einlass (5) und einen Auslass (6) für eine wässrige Lösung, die horizontal voneinander beabstandet sind;
- mindestens einen Einlass zur Injektion eines komprimierten Gases (8) in die wässrige Lösung;
- einen Auslass (10), um Gas aus einem Kopfraum über dem Bett geformter Elemente zu entfernen;
- mindestens einen Einlass (21) zur Injektion komprimierter Luft (20) zur Entfernung einer Beschichtung von der Oberfläche der geformten Elemente, wobei die Beschichtung im Wesentlichen aus gefälltem Calciumcarbonat besteht; und
- mindestens einen Auslass (23) zur Ausleitung von abgesetzten Teilchen aus Calciumcarbonat, der mit einem Sieb mit einer Maschenweite versehen ist, die groß genug ist, um die abgesetzten Teilchen durchzulassen, aber kleiner ist als der kleinste Durchmesser der geformten Elemente, und der durch mindestens ein Regelventil (24) betrieben wird.

**19.** Anlage nach Anspruch 18, wobei sich die Schächte (3) aus dem Boden des Reaktors zu der Oberseite des Betts (2) erstrecken und in ihrem Bodenbereich (4) mit einer Maschenweite kleiner als der kleinste Durchmesser der geformten Elemente perforiert sind und ebenso mit einem Sieb an ihrem oberen Öffnungsende versehen sind, der eine Maschenweite kleiner als der kleinste Durchmesser der geformten Elemente aufweist; und
wobei der mindestens eine Einlass zur Injektion eines komprimierten Gases (8) zur Injektion des komprimierten Gases in die wässrige Lösung an dem Boden der vertikalen Schächte (9) dient.

**20.** Anlage nach Anspruch 18, weiterhin ein Sieb (64) über dem Bett (2) geformter Elemente umfassend, wobei das Sieb eine Maschenweite kleiner als der kleinste Durchmesser der geformten Elemente aufweist; und
wobei der mindestens eine Einlass zur Injektion eines komprimierten Gases in die wässrige Lösung über dem Sieb (64) lokalisiert ist.

**21.** Anlage nach den Ansprüchen 18 bis 20, die weiterhin mit einem oder mehreren vertikalen Prallblechen (15) versehen ist, um wässrige Lösung, die über dem Bett geformter Elemente strömt, aufzustauen, wobei folglich ein Kurzschließen der horizontalen Strömung (14) durch das Bett von dem Einlass (5) zu dem Auslass (6) verhindert wird, wobei die Prallbleche gegebenenfalls die Oberseite des Betts geformter Elemente von einer Wand des Reaktors zu der entgegengesetzten Wand überspannen.

**22.** Anlage nach Anspruch 18 bis 21, wobei die vertikalen Schächte im Wesentlichen zylindrisch sind.

**23.** Anlage nach einem der Ansprüche 18 bis 22, wobei der Reaktor im Wesentlichen zylindrisch ist.

**24.** Anlage nach einem der Ansprüche 18 bis 22, wobei der Reaktor in der Gestalt einer Kiste geformt ist.

**25.** Anlage nach Anspruch 24, wobei die vertikalen Schächte als rechteckige oder laminare Körper ausgebildet sind und den Reaktor von einer Wand zu der entgegengesetzten Wand überspannen.

**26.** Anlage nach einem der Ansprüche 18 bis 25, wobei die Anlage mehrere seriell verbundene Reaktoren umfasst.

## Revendications

**1.** Procédé de production de carbonate de calcium précipité (PCC), ledit procédé comprenant les étapes de :

- fourniture d'une solution aqueuse de calcium, de dioxyde de carbone, de bicarbonate et de carbonate ;
- fourniture d'au moins un réacteur (1) contenant un lit (2) d'éléments façonnés, lesdits éléments étant préparés à partir d'un matériau présentant un module d'élasticité inférieur à celui du carbonate de calcium précipité, et un nombre de puits verticaux (3) s'étendant depuis la région inférieure dudit réacteur au moins jusqu'à la partie supérieure dudit lit ;
- introduction de ladite solution à travers un orifice d'entrée (5) dans ledit au moins un réacteur et extraction de la solution du réacteur par un orifice de sortie (6) séparé de manière horizontale de l'orifice d'entrée, créant ainsi un écoulement horizontal (14) et un gradient de pression hydraulique horizontal correspondant à travers le lit d'éléments façonnés ;
- injection d'un gaz comprimé (8) dans la solution aqueuse pour effectuer :

  i) un déplacement de la solution aqueuse à l'intérieur des puits et un gradient de pression hydraulique vertical correspondant dirigé vers l'opposé à travers le lit d'éléments façonnés à l'extérieur des puits verticaux, et
  ii) une interface gaz-eau pour évacuer le dioxyde de carbone dissous dans la solution aqueuse ;

- élimination du gaz comprenant le dioxyde de carbone évacué, d'un espace de tête au-dessus du lit d'éléments façonnés (10) ;
- élimination par des moyens non chimiques d'un revêtement de surface précipité sur au moins une partie des éléments façonnés, lorsqu'une épaisseur cible dudit revêtement a été obtenue, le revêtement étant constitué essentiellement de carbonate de calcium.

**2.** Procédé selon la revendication 1, lesdits puits (3) s'étendant depuis la partie inférieure du réacteur et étant perforés dans leur partie inférieure (4) avec un maillage empêchant lesdits éléments façonnés de pénétrer dans les puits, et le gaz comprimé (8) étant injecté dans la solution aqueuse au niveau de la partie inférieure des puits verticaux pour effectuer :

i) un déplacement vers le haut (11) de la solution aqueuse à l'intérieur des puits et un gradient de pression hydraulique vertical correspondant, dirigé vers le bas, à travers le lit d'éléments façonnés à l'extérieur des puits verticaux (13), et
ii) une interface gaz-eau à l'intérieur des puits (12) pour évacuer le dioxyde de carbone dissous dans la solution aqueuse.

**3.** Procédé selon la revendication 2, les éléments façonnés étant en outre empêchés de pénétrer dans les puits verticaux par des tamis prévus aux ouvertures supérieures des puits.

**4.** Procédé selon la revendication 1, le gaz comprimé (8) étant injecté dans la solution aqueuse (69) au-dessus d'un tamis (64), ledit tamis retenant le lit (2) d'éléments façonnés à un niveau inférieur à une surface d'eau de la solution aqueuse, pour effectuer :

i) un déplacement vers le haut (61) de la solution aqueuse au-dessus du tamis (64), un déplacement vers le bas (62) de la solution aqueuse à l'intérieur des puits, et un gradient de pression hydraulique vertical correspondant, dirigé vers le haut, à travers le lit d'éléments façonnés à l'extérieur des puits verticaux (63), et
ii) une interface gaz-eau dans la solution aqueuse au-dessus du tamis (64) pour évacuer le dioxyde de carbone dissous dans la solution aqueuse.

**5.** Procédé selon l'une quelconque des revendications précédentes, le nombre de puits verticaux par réacteur étant de 1, 2, 3, ou plus.

**6.** Procédé selon l'une quelconque des revendications précédentes, le rapport entre les grandeurs respectives des gradients de pression hydraulique vertical et horizontal dans le lit d'éléments façonnés s'élevant à 5 à 100, de préférence 10 à 50.

**7.** Procédé selon l'une quelconque des revendications précédentes, le revêtement de surface sur les éléments façonnés étant éliminé de manière continue ou intermittente pour équilibrer l'addition de masse provenant de la précipitation.

**8.** Procédé selon la revendication 7, le revêtement étant éliminé de la surface d'éléments façonnés dans le réacteur par injection intermittente d'air comprimé (20) dans le lit des éléments façonnés au niveau d'un ou plusieurs points (21), ladite injection provoquant un décapage à l'air qui détache un revêtement sous forme de particules séparées, qui, en raison d'une densité spécifique élevée, se déposent au niveau de la partie inférieure du réacteur (22), depuis laquelle elles sont extraites à travers un ou plusieurs orifices de sortie (23).

**9.** Procédé selon la revendication 7, le revêtement étant éliminé de la surface d'une fraction d'échantillon d'éléments façonnés, de préférence choisie à partir de la partie inférieure du lit d'éléments façonnés, dans un récipient ou un réacteur séparé (16), tel qu'un hydrocyclone, par des forces mécaniques, de préférence un cisaillement hydraulique, et/ou des ultrasons, après quoi ladite fraction d'échantillon d'éléments façonnés étant réintroduite (19) dans la partie supérieure du lit d'éléments façonnés dans le réacteur.

**10.** Procédé selon l'une quelconque des revendications précédentes, ledit gaz comprimé étant de l'air atmosphérique.

**11.** Procédé selon l'une quelconque des revendications précédentes, aucun autre produit chimique n'étant ajouté à la solution aqueuse de calcium, dioxyde de carbone, bicarbonate et carbonate dissous.

**12.** Procédé selon l'une quelconque des revendications précédentes, la solution aqueuse étant soumise dans le réacteur à un traitement essentiellement non biologique uniquement.

**13.** Procédé selon l'une quelconque des revendications précédentes, la solution aqueuse étant de l'eau souterraine ou de l'eau de surface avec une teneur inhérente en calcium, dioxyde de carbone, bicarbonate et carbonate dissous.

**14.** Procédé selon l'une quelconque des revendications précédentes, au moins une fraction du lit d'éléments façonnés ayant été ensemencée avec du carbonate de calcium avant l'introduction de la solution dans le réacteur afin de catalyser la précipitation du revêtement de surface sur les éléments façonnés.

**15.** Procédé selon l'une quelconque des revendications précédentes, la densité spécifique des éléments façonnés étant comprise entre 0,80 et 1,5 kg/L, de préférence 0,88-0,98 kg/L.

**16.** Procédé selon l'une quelconque des revendications précédentes, le module d'élasticité (module de Young) des éléments façonnés étant compris entre $0{,}05 \cdot 10^9$ N/m$^2$ et $5.10^9$ N/m$^2$ (GPa), de préférence entre 0,4 et 4 GPa.

**17.** Procédé selon l'une quelconque des revendications précédentes, les éléments façonnés étant composés de 80 à 100 % de matériau polymère, de préférence du polypropylène ou du polyéthylène (de faible, moyenne ou haute densité).

**18.** Installation pour la production de carbonate de calcium précipité (PCC) selon le procédé de la revendication 1, ladite installation comprenant au moins un réacteur comprenant :

- un lit (2) d'éléments façonnés, lesdits éléments étant préparés à partir d'un matériau présentant un module d'élasticité inférieur à celui du carbonate de calcium précipité ;
- 1, 2, 3 ou plus de 3 puits verticaux (3) s'étendant depuis la région inférieure dudit réacteur au moins jusqu'à la partie supérieure dudit lit ;
- un orifice d'entrée (5) et un orifice de sortie (6) pour une solution aqueuse, espacés de manière horizontale ;
- au moins un orifice d'entrée pour l'injection d'un gaz comprimé (8) dans la solution aqueuse ;
- un orifice de sortie (10) pour évacuer le gaz d'un espace de tête situé au-dessus du lit d'éléments façonnés ;
- au moins un orifice d'entrée (21) pour l'injection d'air comprimé (20) pour l'élimination d'un revêtement de la surface des éléments façonnés, ledit revêtement étant essentiellement constitué de carbonate de calcium précipité ; et
- au moins un orifice de sortie (23) pour l'extraction de particules de carbonate de calcium déposées, pourvu d'un tamis d'un maillage suffisamment grand pour laisser passer les particules déposées mais inférieur au plus petit diamètre des éléments façonnés, et actionné par au moins une vanne de régulation (24).

**19.** Installation selon la revendication 18, lesdits puits (3) s'étendant depuis la partie inférieure du réacteur jusqu'à la partie supérieure dudit lit (2) et étant perforés dans leur région inférieure (4) avec un maillage inférieur au plus petit diamètre des éléments façonnés et étant également pourvus d'un tamis au niveau de leur extrémité d'ouverture supérieure ayant un maillage inférieur au plus petit diamètre des éléments façonnés ; et
l'au moins un orifice d'entrée pour l'injection d'un gaz comprimé (8) étant destiné à l'injection du gaz comprimé dans la solution aqueuse au niveau de la partie inférieure des puits verticaux (9).

**20.** Installation selon la revendication 18, comprenant en outre un tamis (64) au-dessus du lit (2) d'éléments façonnés, ledit tamis ayant un maillage inférieur au plus petit diamètre des éléments façonnés ; et
l'au moins un orifice d'entrée pour l'injection d'un gaz comprimé dans la solution aqueuse étant situé au-dessus dudit tamis (64).

**21.** Installation selon les revendications 18 à 20, étant en outre pourvue d'une ou plusieurs chicanes verticales (15) afin d'accumuler toute solution aqueuse s'écoulant au-dessus du lit d'éléments façonnés, empêchant ainsi un court-circuit de l'écoulement horizontal (14) à travers ledit lit depuis l'orifice d'entrée (5) vers l'orifice de sortie (6), les chicanes s'étendant éventuellement sur la partie supérieure du lit d'éléments façonnés depuis une paroi du réacteur jusqu'à la paroi opposée.

**22.** Installation selon les revendications 18 à 21, les puits verticaux étant sensiblement cylindriques.

**23.** Installation selon l'une quelconque des revendications 18 à 22, le réacteur étant sensiblement cylindrique.

**24.** Installation selon l'une quelconque des revendications 18 à 22, le réacteur ayant la forme d'une boîte.

**25.** Installation selon la revendication 24, les puits verticaux étant formés comme des corps rectangulaires ou laminaires et s'étendant dans le réacteur depuis une paroi jusqu'à la paroi opposée.

**26.** Installation selon l'une quelconque des revendications 18 à 25, ladite installation comprenant plusieurs réacteurs reliés en série.

Fig. 1

15
15
1
3
2
14
5
6

Fig. 2

3
15
15
1
2
14
5
6

Fig. 3

10
1
7
15
15
34
3
2
14
14
5
6
13
11
12
20
4
9
21
24
23
9
22
8
17

Fig. 4

10
16
19
17
3
14
15
15
7
34
1
2
5
14
6
13
11
12
4
8
18
9

Fig. 5

6
3
1
2
5
15
6
14
6
6

Fig. 6

10
1
5
15
7
34
3
2
6
14
14
13
11
12
8
4
44
21
9
20
22
24
17

Fig. 7

10
10
81
7
5
91
34
3
2
6
13
11
12
6
5
4
4
8
9

Fig. 9

6
53
1
2
5
52
14
51
15
3

Fig. 10

10
1
15
14
5
61
61
61
3
14
14
6
8
69
64
63
62
63
62
63
2
20
65
21
22
24
17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011110744 A2


### Non-patent literature cited in the description


- **PLUMMER L. N. ; WIGLEY T. L. M. ; PARKHURST D. L.** The kinetics of calcite dissolution. *Amer. J. Sci.,* 1978, vol. 278, 537-573
- **DREYBRODT, W. ; EISENLOHR, L. ; MADRY, B. ; RINGER, S.** Precipitation kinetics of calcite in the system: CaCO3 - H2O - CO2: The conversion to CO2 by the slow process H+ + HCO3- + CO2 + H2O as a rate limiting step. *Geochimica et Cosmochimica Acta,* 1997, vol. 60, 3897-3904
- **VAN RAALTE-DREWES et al.** Scaling Propensity of Water - new Predictive Parameters. Kiwa©. IWA publishing, 2004, 30
- **PARKHURST D.L ; APPELLO C.A.J.** *Description of Input and Examples for PHREEQC Version 3 - A Computer Program for Speciation, Batch-Reaction, One-Dimensional Transport, and Inverse Geochemical Calculations,* 2013, https://wwwbrr.cr.usgs.gov/projects/GWC_coupled/phreeqc